# EUROPEAN PATENT APPLICATION

(11) **EP 4 130 104 A1**
(43) Date of publication of application: **08.02.2023**
(21) Application number: 21781187.6
(22) Date of filing: 26.03.2021
(51) Int. Cl.: C08J 3/22, C08L 33/14, C08L 67/02, C08L 67/03, D01F 6/62, D01F 6/92, C08K 3/22

(54) **INFRARED-ABSORBENT RESIN COMPOSITION AND INFRARED-ABSORBENT FIBER**

(30) Priority: 31.03.2020 JP 2020064015; 28.10.2020 JP 2020180495
(71) Applicant: Kyodo Printing Co., Ltd., Tokyo 112-8501 (JP)
(72) Inventor: YOSHIZUMI, Wataru, Tokyo 112-8501 (JP); TAKIGAWA, Ryo, Tokyo 112-8501 (JP)
(74) Representative: Ricker, Mathias
(86) International application number: PCT/JP2021/013112
(87) International publication number: WO 2021/200748

(57) **Abstract**

An infrared-absorbent resin composition including a tungsten-based infrared-absorbent pigment, copolymerized polyethylene terephthalate, and a polyethylene terephthalate homopolymer, wherein the copolymerized polyethylene terephthalate is crystalline.

## Description

### FIELD

The present invention relates to an infrared-absorbent resin composition and an infrared-absorbent fiber.

### BACKGROUND

Textile products having the property of generating heat by absorbing light are well known. For example, infrared-absorbent pigments such as carbon black have the property of generating heat by absorbing infrared radiation, and are thus kneaded into or applied to fibers to obtain exothermic fibers.

However, there is an issue with fibers comprising carbon black as an infrared-absorbent pigment in which the color tone becomes extremely dark due to the black color of carbon black, and thus a design having a bright color tone cannot be applied.

In this regard, PTL 1 discloses an infrared-absorbent fiber containing microparticles of a composite tungsten oxide typified by Cs_{0.33}WO₃ as an infrared-absorbent pigment, wherein the content of the microparticles with respect to the solid content of the fiber is 0.001 to 80% by mass.

When compared with the black color of carbon black, a composite tungsten oxide has a bright color tone. Consequently, textile products containing a composite tungsten oxide have an advantage of having a greater degree of freedom in terms of design, in comparison with textile products containing carbon black.

PTL 2 discloses a method for manufacturing a composite tungsten oxide or a tungsten oxide having a Magnéli phase. In addition, PTL 3 describes a dispersant suitably used for dispersing a composite tungsten oxide in a resin.

### [CITATION LIST]

### [PATENT LITERATURE]

[PTL 1] Japanese Unexamined Patent Publication (Kokai) No. 2006-132042
[PTL 2] Japanese Unexamined Patent Publication (Kokai) No. 2005-187323
[PTL 3] Japanese Unexamined Patent Publication (Kokai) No. 2008-024902

### SUMMARY

### [TECHNICAL PROBLEM]

Polyester fibers, particularly polyethylene terephthalate (PET) fibers, are heavily used as a material constituting textile products. PET has advantages such as high strength, high weatherability and heat resistance, good dyeability, light weight, and excellent processability.

Thus, using PET as a fiber material containing an infrared-absorbent pigment is desired. In this regard, PTL 1 discloses a PET fiber containing composite tungsten oxide microparticles.

According to the technique described in PTL 1, the fiber containing composite tungsten oxide microparticles is obtained by preparing a masterbatch (MB) containing a high concentration of composite tungsten oxide microparticles in PET, mixing the MB with PET not containing composite tungsten oxide microparticles, and melt-spinning the mixture.

However, infrared-absorbent pigments such as Cs_{0.33}WO₃ have poor dispersibility in homopolymers of PET. Thus, an infrared-absorbent fiber manufactured using a PET homopolymer and a tungsten-based infrared-absorbent pigment has insufficient transparency and infrared absorption. By using a copolymerized PET in place of a PET homopolymer, the dispersibility of the infrared-absorbent pigment can be improved. However, the spinnability of a copolymerized PET is insufficient.

### [SOLUTION TO PROBLEM]

In view of the above circumstances, an object of the present invention is to provide an infrared-absorbent resin composition in which dispersibility of a tungsten-based infrared-absorbent pigment and spinnability are both excellent, and an infrared-absorbent fiber having both excellent transparency and infrared absorption obtained from the infrared-absorbent resin composition.

The present invention is as follows.

«Aspect 1» An infrared-absorbent resin composition, comprising a tungsten-based infrared-absorbent pigment, a copolymerized polyethylene terephthalate, and a polyethylene terephthalate homopolymer, wherein
   the copolymerized polyethylene terephthalate has crystallinity.
«Aspect 2» The infrared-absorbent resin composition according to Aspect 1, wherein the copolymerized polyethylene terephthalate has a melting point of 210 °C or higher and 240 °C or lower.
«Aspect 3» The infrared-absorbent resin composition according to Aspect 1 or 2, wherein the copolymerized polyethylene terephthalate comprises a structure derived from isophthalic acid or an ester thereof as a third monomer.
«Aspect 4» The infrared-absorbent resin composition according to Aspect 3, wherein the copolymerized polyethylene terephthalate comprises the structure derived from isophthalic acid or an ester thereof in a range of 5.0 mol% or greater and 30 mol% or less, based on an overall number of moles of a dicarboxylic acid component.
«Aspect 5» The infrared-absorbent resin composition according to any one of Aspects 1 to 4, wherein an amount of a copolymerization component derived from a third monomer of the polyethylene terephthalate homopolymer is less than 2.0 mol%, based on a total number of moles of a diol component and a dicarboxylic acid component in the polyethylene terephthalate homopolymer.
«Aspect 6» The infrared-absorbent resin composition according to any one of Aspects 1 to 5, wherein a content ratio of the copolymerized polyethylene terephthalate is 0.1% by mass or greater and 50% by mass or less, based on an overall mass of the infrared-absorbent resin composition.
«Aspect 7» The infrared-absorbent resin composition according to any one of Aspects 1 to 6, wherein a content ratio of the copolymerized polyethylene terephthalate is 0.5% by mass or greater and 45% by mass or less, based on an overall mass of the infrared-absorbent resin composition.
«Aspect 8» The infrared-absorbent resin composition according to any one of Aspects 1 to 7, wherein a content ratio of the copolymerized polyethylene terephthalate is 0.5% by mass or greater and 20% by mass or less, based on a total mass of the copolymerized polyethylene terephthalate and the polyethylene terephthalate homopolymer.
«Aspect 9» The infrared-absorbent resin composition according to any one of Aspects 1 to 8, wherein a content ratio of the tungsten-based infrared-absorbent pigment is 0.01% by mass or greater, based on an overall mass of the infrared-absorbent resin composition.
«Aspect 10» The infrared-absorbent resin composition according to any one of Aspects 1 to 9, wherein the tungsten-based infrared-absorbent pigment is selected from the group consisting of
   composite tungsten oxides, represented by general formula (1): MₓW_{y}O_{z}, wherein M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, and
   tungsten oxides having a Magnéli phase, represented by general formula (2): W_{y}O_{z}, wherein W is tungsten; O is oxygen; y and z are each a positive number, and 2.45 ≤ z/y ≤ 2.999. «Aspect 11» The infrared-absorbent resin composition according to any one of Aspects 1 to 10, further comprising an acrylic polymer dispersant.
«Aspect 12» An infrared-absorbent fiber, comprising the infrared-absorbent resin composition according to any one of Aspects 1 to 11.
«Aspect 13» A method for manufacturing an infrared-absorbent fiber, comprising
   preparing the infrared-absorbent resin composition according to any one of claims 1 to 11; and
   melt-spinning the infrared-absorbent resin composition.
«Aspect 14» The method for manufacturing an infrared-absorbent fiber according to claim 13, wherein the infrared-absorbent resin composition is prepared by a method comprising the following steps:
   kneading the tungsten-based infrared-absorbent pigment and the copolymerized polyethylene terephthalate to manufacture an infrared-absorbent pigment-containing masterbatch; and
   kneading the infrared-absorbent pigment-containing masterbatch and the polyethylene terephthalate homopolymer to manufacture the infrared-absorbent resin composition.
«Aspect 15» An infrared-absorbent fabric, comprising the infrared-absorbent fiber according to Aspect 12.
«Aspect 16» An infrared-absorbent garment, comprising the infrared-absorbent fabric according to Aspect 15.

### [ADVANTAGEOUS EFFECTS OF INVENTION]

According to the present invention, an infrared-absorbent resin composition in which dispersibility of a tungsten-based infrared-absorbent pigment and spinnability are both excellent, and an infrared-absorbent fiber having both excellent transparency and infrared absorption obtained from the infrared-absorbent resin composition are provided.

### BRIEF DESCRIPTION OF DRAWINGS

FIG. 1 is an explanatory diagram showing procedures for infrared spectroscopic analysis and evaluation of heat storage effect.
FIG. 2 is an infrared spectrum of knit fabric samples obtained in Examples 1, 4, and 6 and Comparative Example 2.
FIG. 3 is a graph showing a change over time in residual moisture content when a test fabric produced using fibers obtained in Example 3 was wetted with water, in comparison with a reference fabric.

### DESCRIPTION OF EMBODIMENTS

### «Infrared-absorbent resin composition»

The infrared-absorbent resin composition of the present invention is
an infrared-absorbent resin composition comprising a tungsten-based infrared-absorbent pigment, a copolymerized polyethylene terephthalate, and a polyethylene terephthalate homopolymer, wherein
the copolymerized polyethylene terephthalate has crystallinity.

### <Tungsten-based infrared-absorbent pigment>

Examples of the tungsten-based infrared-absorbent pigment may include particles of a tungsten oxide-based compound used in infrared absorption applications.

For example, the tungsten-based infrared-absorbent pigment may include one or more infrared-absorbent pigments selected from the group consisting of composite tungsten oxides, represented by general formula (1): MₓW_{y}O_{z}, wherein M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, and tungsten oxides having a Magnéli phase, represented by general formula (2): W_{y}O_{z}, wherein W is tungsten; O is oxygen; y and z are each a positive number; and 2.45 ≤ z/y ≤ 2.999.

The tungsten-based infrared-absorbent pigment can be manufactured by a method disclosed in, for example, PTL 2 (Japanese Unexamined Patent Publication (Kokai) No. 2005-187323).

An element M is added to the composite tungsten oxide represented by the general formula (1), whereby, including when z/y = 3.0 in the general formula (1), free electrons are generated, the absorption characteristics from the free electrons are exhibited in the near-infrared light wavelength region, and the composite tungsten oxide is effective as a material that absorbs near-infrared radiation near the wavelength of 1,000 nm.

Particularly, from the viewpoint of improving optical characteristics and weatherability as a near-infrared-absorbent material, one or more of Cs, Rb, K, Tl, In, Ba, Li, Ca, Sr, Fe, and Sn can be used as the M element.

When the value of x/y indicating the amount of the element M added is greater than 0, sufficient free electrons are generated and a near-infrared absorption effect can be sufficiently obtained. The larger the amount of the element M added, the greater the number of free electrons supplied, and in turn the greater the near-infrared absorption effect. Normally, this effect saturates at the value of x/y of about 1. The value of x/y may be set to 1 or less to prevent the formation of an impurity phase in a pigment-containing layer. The value of x/y may be 0.001 or greater, 0.005 or greater, 0.10 or greater, 0.20 or greater, or 0.30 or greater and may be 0.85 or less, 0.50 or less, or 0.35 or less. Particularly, the value of x/y can be set to 0.33.

The value of z/y in the general formulas (1) and (2) indicates the level of oxygen control. For the composite tungsten oxide represented by the general formula (1), since the value of z/y satisfies the relation 2.2 ≤ z/y ≤ 3.0, in addition to operating the same oxygen control mechanism as the tungsten oxide represented by the general formula (2), even when z/y = 3.0, free electrons are supplied due to the addition of the element M. In the general formula (1), the value of z/y may satisfy the relation 2.45 ≤ z/y ≤ 3.0.

When the composite tungsten oxide represented by the general formula (1) comprises a hexagonal crystal structure or consists of a hexagonal crystal structure, transmission in the visible light wavelength region of infrared-absorbent material microparticles is increased, and absorption in the near-infrared light wavelength region is increased. When cations of the element M are added to and present in the voids of the hexagonal crystal, the transmission in the visible light wavelength region is increased and the absorption in the near-infrared light wavelength region is increased. Generally, when an element M having a large ionic radius is added, hexagonal crystals are formed. Specifically, hexagonal crystals are easily formed when an element having a large ionic radius such as Cs, K, Rb, Tl, In, Ba, Sn, Li, Ca, Sr, or Fe is added. However, the present invention is not limited to these elements, and for elements other than these elements, the additive element M may be present in the hexagonal voids formed by WO₆ units.

When the composite tungsten oxide having a hexagonal crystal structure has a uniform crystal structure, the amount of the additive element M added can be set to 0.2 or greater and 0.5 or less or 0.30 or greater and 0.35 or less in terms of the value of x/y. Particularly, the value of x/y can be set to 0.33. When the value of x/y is 0.33, it is considered that the additive element M is arranged substantially in all the hexagonal voids.

Other than hexagonal, a tetragonal or cubic tungsten bronze also has a near-infrared absorption effect. Depending on the crystal structure, the absorption sites for the near-infrared light wavelength region tend to change, and the absorption sites tend to move to the long wavelength side in the order of cubic < tetragonal < hexagonal. In addition, the absorption in the visible light wavelength region is reduced in the order of hexagonal < tetragonal < cubic. Thus, in applications where the amount of light in the visible light wavelength region transmitted and the amount of light in the near-infrared light wavelength region absorbed are increased, a hexagonal tungsten bronze may be used.

A tungsten oxide having a Magnéli phase represented by the general formula (2) is suitably used as a near-infrared-absorbent pigment, since the so-called "Magnéli phase" having a composition ratio in which the value of z/y satisfies the relation 2.45 ≤ z/y ≤ 2.999 imparts high stability and high absorption characteristics in the near-infrared light wavelength region.

For the pigment as described above, the transparent color tone is often bluish to greenish due to significant absorption of light in the near-infrared light wavelength region, particularly near the wavelength of 1,000 nm. In addition, the dispersed particle size of the tungsten-based infrared-absorbent pigment can be selected on a case-by-case basis according to the purpose of use thereof. In applications where transparency is maintained, it is preferable that the dispersed particle size be 2,000 nm or less by volume average. When the dispersed particle size is 2,000 nm or less, the difference between the peak of transmittance (reflectance) in the visible light wavelength region and the bottom of absorption in the near-infrared light wavelength region becomes large, and the effect of a near-infrared-absorbent pigment having transparency in the visible light wavelength region can be exhibited. Additionally, for particles having a dispersed particle size of less than 2,000 nm, light is not completely blocked by scattering, and visibility in the visible light wavelength region can be maintained while transparency can be efficiently maintained.

When transparency in the visible light wavelength region is emphasized, scattering by the particles is preferably taken into account. Specifically, the dispersed particle size by volume average of the tungsten-based infrared-absorbent pigment is preferably 200 nm or less and more preferably 100 nm or less, 50 nm or less, or 30 nm or less. When the dispersed particle size of the infrared-absorbent material microparticles is 200 nm or less, geometric scattering or Mie scattering is reduced, and the microparticles enter the Rayleigh scattering region. In the Rayleigh scattering region, the scattered light decreases in inverse proportion to the sixth power of the dispersed particle size. Thus, as the dispersed particle size decreases, scattering is reduced and transparency is improved. The dispersed particle size is preferably 100 nm or less, since the amount of scattered light becomes very small. From the viewpoint of avoiding light scattering, it is preferable that the dispersed particle size be small. On the other hand, a dispersed particle size of 1 nm or more, 3 nm or more, 5 nm or more, or 10 nm or more tends to facilitate industrial production. The dispersed particle size by volume average of the tungsten-based infrared-absorbent pigment was measured using a Microtrac particle size analyzer (manufactured by Nikkiso Co., Ltd.) by a dynamic light scattering method, in which microparticles in Brownian motion are irradiated with laser light to obtain light scattering information, and a particle size is determined therefrom.

The content of the tungsten-based infrared-absorbent pigment in the infrared-absorbent resin composition of the present invention may be 0.01% by mass or greater, 0.02% by mass or greater, 0.03% by mass or greater, 0.05% by mass or greater, 0.07% by mass or greater, or 0.10% by mass or greater and may be 2.00% by mass or less, 1.00% by mass or less, 0.80% by mass or less, 0.50% by mass or less, 0.30% by mass or less, or 0.20% by mass or less. For example, the content thereof may be 0.01% by mass or greater and 2.00% by mass or less, or 0.05% by mass or greater and 0.50% by mass or less.

The tungsten-based infrared-absorbent pigment may be treated with a silane coupling agent, whereby near-infrared absorption and transparency in the visible light wavelength region are enhanced.

The tungsten-based infrared-absorbent pigment may also be treated with a dispersant, whereby dispersibility in the infrared-absorbent resin composition of the present invention is enhanced. The dispersant may be, for example, an acrylic polymer. Examples of the acrylic polymer may include polymer dispersants comprising an acrylic backbone and a hydroxyl or epoxy group. Such a dispersant is described in, for example, PTL 3 (Japanese Unexamined Patent Publication (Kokai) No. 2008-024902).

The amount of the dispersant with respect to 100 parts by mass of the tungsten-based infrared-absorbent pigment may be, for example, 10 parts by mass or more, 50 parts by mass or more, 100 parts by mass or more, 200 parts by mass or more, or 300 parts by mass or more and may be, for example, 1,000 parts by mass or less, 800 parts by mass or less, 500 parts by mass or less, or 400 parts by mass or less.

When the tungsten-based infrared-absorbent pigment is treated with a silane coupling agent or a dispersant, the silane coupling agent or the dispersant is contained in the infrared-absorbent resin composition of the present invention. Thus, the infrared-absorbent resin composition of the present invention may further comprise a silane coupling agent or a dispersant.

### <Copolymerized polyethylene terephthalate>

The copolymerized polyethylene terephthalate contained in the infrared-absorbent resin composition of the present invention is a copolymerized polyethylene terephthalate having crystallinity.

The copolymerized polyethylene terephthalate of the present invention has crystallinity. Consequently, when the copolymerized polyethylene terephthalate is measured by differential scanning calorimetry (DSC), a clear peak for a melting point is observed. The melting point of the copolymerized polyethylene terephthalate, measured by DSC in accordance with JIS K7121:2012, may be 210 °C or higher, 215 °C or higher, 220 °C or higher, 225 °C or higher, or 230 °C or higher and may be 240 °C or lower, 235 °C or lower, 230 °C or lower, or 225 °C or lower. Due to the copolymerized polyethylene terephthalate having such a melting point, the dispersibility of the infrared-absorbent pigment is improved without impairing the melt-spinnability of the infrared-absorbent resin composition. For example, the melting point may be 210 °C or higher and 240 °C or lower, or 215 °C or higher and 235 °C or lower. In such a range, the infrared-absorbent resin composition can be processed at a temperature less likely to generate volatile components, and unevenness during processing and fiber breakage during spinning of the infrared-absorbent resin composition are more easily suppressed.

The copolymerized polyethylene terephthalate contained in the infrared-absorbent resin composition of the present invention may have an intrinsic viscosity of 0.60 dL/g or more. Intrinsic viscosity is a physical property value associated with the molecular weight or degree of branching of a polymer. The intrinsic viscosity as mentioned herein is a value measured with a capillary viscometer, in accordance with JIS K 7367-5:2000.

The intrinsic viscosity of the copolymerized polyethylene terephthalate may be 0.60 dL/g or more, 0.62 dL/g or more, 0.65 dL/g or more, 0.70 dL/g or more, 0.75 dL/g or more, 0.80 dL/g or more, 0.85 dL/g or more, 0.90 dL/g or more, 0.95 dL/g or more, 1.00 dL/g or more, or 1.10 dL/g or more and 1.30 dL/g or less, 1.25 dL/g or less, 1.20 dL/g or less, 1.15 dL/g or less, 1.10 dL/g or less, 1.05 dL/g or less, 1.00 dL/g or less, 0.95 dL/g or less, 0.90 dL/g or less, 0.85 dL/g or less, 0.80 dL/g or less, 0.75 dL/g or less, or 0.70 dL/g or less. It is considered that by having such intrinsic viscosity for the copolymerized polyethylene terephthalate, dispersibility of the tungsten-based infrared-absorbent pigment can be increased. For example, the intrinsic viscosity thereof may be 0.60 dL/g or more and 1.30 dL/g or less. When the infrared-absorbent resin composition of the present invention is used as a fiber, the intrinsic viscosity may be 0.60 dL/g or more and 0.80 dL/g or less, particularly 0.62 dL/g or more and 0.70 dL/g or less.

By using a copolymerized polyethylene terephthalate in the infrared-absorbent resin composition of the present invention, dispersibility of the tungsten-based infrared-absorbent pigment is improved. Although the reason therefor is not clear, the present inventors speculate as follows.

A copolymerized polyethylene terephthalate has a higher melt viscosity in comparison with a polyethylene terephthalate homopolymer having the same intrinsic viscosity. Consequently, during kneading when preparing the infrared-absorbent resin composition, a stronger shear force is applied to the tungsten-based infrared-absorbent pigment, whereby aggregates of the tungsten-based infrared-absorbent pigment can be more finely crushed. As a result, when a copolymerized polyethylene terephthalate is used, dispersibility of the tungsten-based infrared-absorbent pigment is presumably improved. Additionally, the high melt viscosity of the copolymerized polyethylene terephthalate is considered to be affected by the shape of the molecular backbone of the copolymerized polyethylene terephthalate being different from that of the homopolymer, due to the inclusion of a copolymerization component derived from a third monomer in the copolymerized polyethylene terephthalate.

As used herein, copolymerized polyethylene terephthalate refers to polyethylene terephthalate obtained by copolymerization, using not only ethylene glycol as a diol component and terephthalic acid or an ester thereof as a dicarboxylic acid component but also a third monomer. Although copolymerized polyethylene terephthalate easily becomes amorphous due to the inclusion of a third monomer, the copolymerized polyethylene terephthalate used in the present invention is crystalline even with a third monomer included therein. The present inventors have discovered that when such a crystalline copolymerized polyethylene terephthalate is used, advantageous effects can be exhibited.

The third monomer as a diol component is not particularly limited as long as the resulting polyethylene terephthalate is crystalline, whereby the advantageous effects of the present invention are obtained. Examples thereof may include aliphatic diols such as propylene glycol, butanediol, hexanediol, octanediol, decanediol, and neopentyl glycol; alicyclic diols such as 1,4-cyclohexanedimethanol; aromatic diols such as bisphenol A and bisphenol S or ethylene oxide adducts thereof; and triols thereof such as trimethylolpropane. These diol components may be used in a range of 30 mol% or less, 25 mol% or less, 20 mol% or less, or 15 mol% or less and 5.0 mol% or greater, 6.0 mol% or greater, 8.0 mol% or greater, or 10 mol% or greater, based on an overall number of moles of the diol component.

The third monomer as a dicarboxylic acid component is not particularly limited as long as the resulting polyethylene terephthalate is crystalline, whereby the advantageous effects of the present invention are obtained. Examples thereof may include aliphatic dicarboxylic acids such as malonic acid, succinic acid, glutaric acid, adipic acid, sebacic acid, and azelaic acid; alicyclic dicarboxylic acids such as 1,4-cyclohexanedicarboxylic acid; aromatic dicarboxylic acid such as phthalic acid, isophthalic acid, and 2,6-naphthalenedicarboxylic acid; and salts thereof, such as sodium sulfoisophthalate, and esters thereof. Of these, it was found that a copolymerized polyethylene terephthalate using isophthalic acid or an ester thereof as the third monomer is particularly preferable. These dicarboxylic acids may be used in a range of 30 mol% or less, 25 mol% or less, 20 mol% or less, or 15 mol% or less and 5 mol% or greater, 6 mol% or greater, 8 mol% or greater, or 10 mol% or greater, based on an overall number of moles of the dicarboxylic acid component.

The content ratio of the copolymerized polyethylene terephthalate in the infrared-absorbent resin composition may be, for example, 0.1% by mass or greater, 0.3% by mass or greater, 0.5% by mass or greater, 1.0% by mass or greater, 3.0% by mass or greater, or 5.0% by mass or greater and may be, for example, 50% by mass or less, 45% by mass or less, 40% by mass or less, 35% by mass or less, 30% by mass or less, 25% by mass or less, or 20% by mass or less, based on an overall mass of the infrared-absorbent resin composition. For example, the content thereof may be 0.1% by mass or greater and 50% by mass or less, or 1.0% by mass or greater and 20% by mass or less.

The content ratio of the copolymerized polyethylene terephthalate may typically be, for example, 0.5% by mass or greater and 45% by mass or less, based on an overall mass of the infrared-absorbent resin composition.

The content ratio of the copolymerized polyethylene terephthalate may be, for example, 0.1% by mass or greater, 0.5% by mass or greater, 1.0% by mass or greater, 2.0% by mass or less, 3.0% by mass or greater, 4.0% by mass, or 5.0% by mass or greater and may be, for example, 50% by mass or less, 40% by mass or less, 30% by mass or less, 25% by mass or less, 20% by mass or less, or 15% by mass or less, based on a total mass of the copolymerized polyethylene terephthalate and the polyethylene terephthalate homopolymer.

The content ratio of the copolymerized polyethylene terephthalate may typically be, for example, 0.5% by mass or greater and 20% by mass or less, based on a total mass of the copolymerized polyethylene terephthalate and the polyethylene terephthalate homopolymer.

As described above, the structure derived from the third monomer in the copolymerized polyethylene terephthalate relates to the dispersibility of the tungsten-based infrared-absorbent pigment in the infrared-absorbent resin composition via an effect of increasing the melt viscosity. On the other hand, it is considered that when the melt viscosity of the infrared-absorbent resin composition increases excessively, the spinnability of the composition is impaired. From these viewpoints, the content ratio of a copolymerization component derived from the third monomer in the copolymerized polyethylene terephthalate may be, for example, 0.01% by mass or greater, 0.03% by mass or greater, 0.05% by mass or greater, 0.1% by mass or greater, 0.2% by mass or greater, 0.3% by mass or greater, 0.4% by mass or greater, 0.5% by mass or greater, or 1.0% by mass or greater and may be, for example, 10% by mass or less, 8% by mass or less, 6% by mass or less, 5% by mass or less, 4% by mass or less, 3% by mass or less, or 2% by mass or less, based on an overall mass in the infrared-absorbent resin composition.

The content ratio of a copolymerization component derived from the third monomer in the copolymerized polyethylene terephthalate may typically be, for example, 0.1% by mass or greater and 5.0% by mass or less, based on an overall mass in the infrared-absorbent resin composition.

### <Polyethylene terephthalate homopolymer>

The polyethylene terephthalate homopolymer contained in the infrared-absorbent resin composition of the present invention refers to polyethylene terephthalate obtained using substantially only ethylene glycol as a diol component and substantially only terephthalic acid or an ester thereof as a dicarboxylic acid component. The polyethylene terephthalate homopolymer is substantially free of copolymerization components derived from the third monomer.

Specifically, the polyethylene terephthalate homopolymer contained in the infrared-absorbent resin composition of the present invention comprises a copolymerization component derived from the third monomer in an amount of, for example, less than 2.0 mol%, 1.5 mol% or less, 1.0 mol% or less, 0.5 mol% or less, or 0.1 mol% or less, based on a total number of moles of the diol component and the dicarboxylic acid component in the polyethylene terephthalate homopolymer, or does not comprise any copolymerization component derived from the third monomer.

The intrinsic viscosity of the polyethylene terephthalate homopolymer contained in the infrared-absorbent resin composition of the present invention may be 0.60 dL/g or more and 0.70 dL/g or less, particularly 0.62 dL/g or more and 0.64 dL/g or less.

For the polyethylene terephthalate homopolymer contained in the infrared-absorbent resin composition of the present invention, the melting point measured by DSC in accordance with JIS K7121:2012 may be higher than 240 °C, 245 °C or higher, 250 °C or higher, or 255 °C or higher and may be, for example, 270 °C or lower, 265 °C or lower, 260 °C or lower, 255 °C or lower, or 250 °C or lower. By using a polyethylene terephthalate homopolymer having such a melting point, satisfactory melt-spinnability can be ensured without impairing dispersibility of the infrared-absorbent pigment in the infrared-absorbent resin composition. The melting point of the polyethylene terephthalate homopolymer may typically be, for example, 250 °C or higher and 265 °C or lower.

The content ratio of the polyethylene terephthalate homopolymer in the infrared-absorbent resin composition may be, for example, 50% by mass or greater, 60% by mass or greater, 70% by mass or greater, 75% by mass or greater, 80% by mass, 85% by mass or greater, 90% by mass or greater, or 95% by mass or greater and may be, for example, 99.9% by mass or less, 99.5% by mass or less, 99% by mass or less, 98% by mass or less, 95% by mass or less, 90% by mass or less, 88% by mass or less, or 85% by mass or less, based on an overall mass of the infrared-absorbent resin composition. For example, the content thereof may be 50% by mass or greater and 99.5% by mass or less, or 75% by mass or greater and 98% by mass or less.

The content ratio of the polyethylene terephthalate homopolymer may be, for example, 55% by mass or greater, 60% by mass or greater, 70% by mass or greater, 75% by mass or greater, 80% by mass or greater, or 85% by mass or greater and may be 99.9% by mass or less, 99.5% by mass or less, 99.0% by mass or less, 98.0% by mass or less, 97.0% by mass or less, 96.0% by mass or less, or 95.0% by mass or less, based on a total mass of the copolymerized polyethylene terephthalate and the polyethylene terephthalate homopolymer.

The content ratio of the copolymerized polyethylene terephthalate may typically be, for example, 80% by mass or more and 99.5% by mass or less, based on a total mass of the copolymerized polyethylene terephthalate and the polyethylene terephthalate homopolymer.

### <Additional components>

The infrared-absorbent resin composition of the present invention may further contain an additional thermoplastic resin other than the copolymerized polyethylene terephthalate and the polyethylene terephthalate homopolymer, as long as the advantageous effects of the present invention can be obtained. Examples of such a thermoplastic resin include polyolefin-based resins, polystyrene-based resins, polyester-based resins (excluding the predetermined copolymerized polyethylene terephthalate and polyethylene terephthalate homopolymer of the present invention), acrylic resins, polyamide-based resins, polyvinyl alcohol-based resins, polyurethane-based resins, polyolefin-based resins, polycarbonate resins, polysulfone resins, and derivatives and mixtures thereof.

When the infrared-absorbent resin composition of the present invention contains an additional thermoplastic resin, a total of the content ratios of the copolymerized polyethylene terephthalate and the polyethylene terephthalate homopolymer may be, for example, 70% by mass or greater, 80% by mass or greater, 90% by mass or greater, 95% by mass or greater, 98% by mass or greater, or 99% by mass or greater, based on a total mass of the copolymerized polyethylene terephthalate, the polyethylene terephthalate homopolymer, and the additional thermoplastic resin.

The infrared-absorbent resin composition of the present invention may further comprise various additives such as antioxidants, plasticizers, colorants, pigments, and fillers, as long as the advantageous effects of the present invention can be obtained.

### «Method for manufacturing infrared-absorbent composition»

The infrared-absorbent composition of the present invention may be manufactured by any method. However, from the viewpoint of effectively exhibiting the dispersion characteristics of the tungsten-based infrared-absorbent pigment, the infrared-absorbent composition of the present invention comprising a copolymerized polyethylene terephthalate may be manufactured by, for example, a method comprising the following steps:
kneading a tungsten-based infrared-absorbent pigment and a copolymerized polyethylene terephthalate to manufacture an infrared-absorbent pigment-containing masterbatch; and
kneading the infrared-absorbent pigment-containing masterbatch and a polyethylene terephthalate homopolymer to manufacture an infrared-absorbent resin composition.

The kneading of each step described above may be carried out using, for example, a batch-type kneader such as a kneader, a Banbury mixer, a Henschel mixer, or a mixing roll; or a continuous kneader such as a twin-screw extruder or a single-screw extruder. The kneading may be carried out at a temperature of about, for example, 200 °C or higher or 230 °C or higher and 300 °C or lower or 260 °C or lower.

### <<Infrared-absorbent fiber>>

The infrared-absorbent fiber of the present invention comprises the infrared-absorbent resin composition of the present invention described above.

The infrared-absorbent fiber of the present invention may be a fiber consisting of only the infrared-absorbent resin composition of the present invention, or may be a fiber consisting of a mixture of the infrared-absorbent resin composition of the present invention and an additional resin material. The additional resin material may be one or more selected from, for example, polyolefin-based resins, polystyrene-based resins, polyester-based resins, acrylic resins, polyamide-based resins, polyvinyl alcohol-based resins, polyurethane-based resins, polyolefin-based resins, polycarbonate resins, polysulfone resins, and derivatives thereof.

From the viewpoint of highly dispersing the tungsten-based infrared-absorbent pigment in a fiber, the infrared-absorbent fiber of the present invention may comprise a copolymerization component derived from the third monomer in the copolymerized polyethylene terephthalate in a range of 0.005 mol% or greater, 0.01 mol% or greater, 0.02 mol% or greater, 0.05 mol% or greater, or 0.10 mol% or greater and 3.00 mol% or less, 2.00 mol% or less, 1.50 mol% or less, 1.20 mol% or less, or 1.00 mol% or less, based on a total number of moles of all diol components and all dicarboxylic acid components included in the copolymerized polyethylene terephthalate and the polyethylene terephthalate homopolymer in the fiber.

The infrared-absorbent fiber of the present invention may comprise, preferably, a copolymerization component derived from isophthalic acid in the copolymerized polyethylene terephthalate in a range of 0.01 mol% or greater, 0.05 mol% or greater, 0.10 mol% or greater, 0.15 mol% or greater, or 0.20 mol% or greater and 6.00 mol% or less, 5.00 mol% or less, 4.00 mol% or less, 3.50 mol% or less, 3.25 mol% or less, 3.00 mol% or less, 2.75 mol% or less, 2.50 mol% or less, 2.25 mol% or less, or 2.00 mol% or less, based on the number of moles of all dicarboxylic acid components included in the copolymerized polyethylene terephthalate and the polyethylene terephthalate homopolymer in the fiber.

From the viewpoint of effectively exhibiting the expected infrared absorption effect of the present invention, the infrared-absorbent fiber of the present invention may comprise a tungsten-based infrared-absorbent pigment in a range of 0.01% by mass or greater, 0.03% by mass or greater, 0.05% by mass or greater, 0.07% by mass or greater, or 0.10% by mass or greater and 2.00% by mass or less, 1.00% by mass or less, 0.80% by mass or less, 0.50% by mass or less, 0.30% by mass or less, or 0.20% by mass or less, based on an overall mass of the fiber.

### «Method for manufacturing infrared-absorbent fiber»

The infrared-absorbent fiber of the present invention may be manufactured by any method.

The infrared-absorbent fiber of the present invention may be manufactured by, for example, a method comprising the following steps:
preparing the infrared-absorbent resin composition of the present invention; and
melt-spinning the infrared-absorbent resin composition.

The stage of preparing an infrared-absorbent resin composition, which is the first stage of the manufacturing method, may be carried out by any method, and may be carried out by, for example a method comprising the following steps:
kneading a tungsten-based infrared-absorbent pigment and a copolymerized polyethylene terephthalate to manufacture an infrared-absorbent pigment-containing masterbatch; and
kneading the obtained infrared-absorbent pigment-containing masterbatch and a polyethylene terephthalate homopolymer to manufacture an infrared-absorbent resin composition.

For the details on the stage of preparing an infrared-absorbent resin composition, the above description regarding a method for manufacturing an infrared-absorbent composition can be cited.

The stage of melt-spinning an infrared-absorbent resin composition, which is the second stage of the manufacturing method, may comprise melt-kneading an infrared-absorbent resin composition and melt-spinning the melt-kneaded resin composition.

The kneading may be carried out using, for example, a batch-type kneader such as a kneader, a Banbury mixer, a Henschel mixer, or a mixing roll; or a continuous kneader such as a twin-screw extruder or a single-screw extruder. The kneading may be carried out at a temperature of 200 °C or higher or 230 °C or higher and 300 °C or lower, 290 °C or lower, or 260 °C or lower. The melt-kneading for melt-spinning the infrared-absorbent resin composition may be carried out as a separate step from or as one step in a stage with the kneading for manufacturing the infrared-absorbent resin composition described above.

### <<Infrared-absorbent fabric>>

The infrared-absorbent fabric of the present invention comprises the infrared-absorbent fiber of the present invention as described above. Thus, the infrared-absorbent fabric of the present invention comprises a tungsten-based infrared-absorbent pigment. As used herein, "fabric" is a concept which includes cloth (woven fabric), knit fabric, nonwoven fabric, braided fabric, lace, and mesh.

Tungsten-based infrared-absorbent pigments have high photothermal conversion property, and are known to raise temperature when infrared radiation is absorbed. Thus, the infrared-absorbent fabric of the present invention comprising a tungsten-based infrared-absorbent pigment has an effect of raising fabric temperature when infrared radiation is absorbed. As a result, the fabric of the present invention has quick-drying property even when wetted. The fabric also has an effect of preventing penetrative photography using an infrared camera (prevention of spy photography).

To take advantage of such characteristics, it is preferable that the infrared-absorbent fabric of the present invention have a larger number of the infrared-absorbent fiber of the present invention arranged on the side exposed during use. For example, in the case of a cloth (fabric) woven in a 3/1 twill weave using the infrared-absorbent fiber of the present invention in the weft only, the temperature raising effect can be enhanced by using the side where the infrared-absorbent fiber of the present invention appears on 75% of the surface as the exposing side, rather than the side where the infrared-absorbent fiber appears on 25% of the surface.

The infrared-absorbent fabric of the present invention may be composed of only the infrared-absorbent fiber of the present invention. The infrared-absorbent fiber of the present invention may be contained in an amount of 10% by mass or greater, 30% by mass or greater, 50% by weight or greater, 60% by weight or greater, 70% by weight or greater, 80% by weight or greater, 90% by weight or greater, or 95% by weight or greater and 98% by weight or less, 95% by weight or less, 90% by weight or less, 80% by weight or less, or 70% by weight or less.

### <<Infrared-absorbent garment>>

According to the present invention, an infrared-absorbent garment comprising the infrared-absorbent fabric as described above is further provided.

The infrared-absorbent garment of the present invention may be composed of only the infrared-absorbent fabric of the present invention, or may be composed of the infrared-absorbent fabric of the present invention and a fabric different therefrom.

### EXAMPLES

### <<Example 1>>

### (1) Manufacture of infrared-absorbent masterbatch

87.5 parts by mass of copolymerized polyethylene terephthalate (copolymerized PET) (comprising 12 mol% of an isophthalic acid component with respect to an overall number of moles of a dicarboxylic acid component, intrinsic viscosity of 0.62 dL/g, melting point of 224 °C) and 12.5 parts by mass (corresponding to 2.88 parts by mass of Cs_{0.33}WO₃ and 9.34 parts by mass of a dispersant) of a cesium tungsten oxide treated with a dispersant (CWO^{®}: YMDS-874, manufactured by Sumitomo Metal Mining Co., Ltd., comprising 23% by mass of Cs_{0.33}WO₃, 75% by mass of dispersant, and 2% by mass of others (such as residual solvent)) as a tungsten-based infrared-absorbent pigment were mixed using a twin-screw extruder (manufactured by Kobe Steel, Ltd., model name "KTX46") and pelletized to obtain an infrared-absorbent masterbatch (MB). The Cs_{0.33}WO₃ content in the MB was 2.9% by mass.

### (2) Preparation of infrared-absorbent resin composition

4.0 parts by mass of the MB obtained above and 96.0 parts by mass of RE530A (product name, manufactured by Toyobo Co., Ltd., homo-PET not comprising a third monomer component, intrinsic viscosity of 0.62 to 0.64 dL/g, melting point of 255 °C) as a polyethylene terephthalate homopolymer (homo-PET) were dry-blended and then mixed in a multifilament melt-spinner at a temperature of 290 °C to prepare an infrared-absorbent resin composition. In the infrared-absorbent resin composition, the MB pellets were diluted 25-fold with homo-PET. The Cs_{0.33}WO₃ content in the infrared-absorbent resin composition was 0.115% by mass.

### (3) Melt-spinning of infrared-absorbent resin composition

The obtained infrared-absorbent resin composition was fiberized in a multifilament melt-spinner under the conditions of a temperature of 290 °C and a take-up speed of 5,000 m/min to obtain a 50-denier, 24-filament fiber (multifilament).

The spinning suitability of the infrared-absorbent resin composition was evaluated according to the following criteria, where the spinning suitability of the infrared-absorbent resin composition obtained in the Examples was "good".

If spinning could be carried out without any issues according to the above conditions: "good" spinning suitability

If yarn breakage occurred but spinning was possible according to the above conditions: "fair" spinning suitability

If spinning was not possible according to the above conditions: "poor" spinning suitability

### (4) Evaluation of fiber

### (4-1) Tensile strength

The tensile strength of the obtained fiber was measured under the conditions of a clamping distance of 20 mm and a pulling speed of 20 mm/min, in accordance with JIS L1015. The tensile strength of the fiber obtained in Example 1 was 4.78 cN/dtex. As long as the value is 3.0 cN/dtex or more, the tensile strength of the fiber can be evaluated as sufficiently high.

### (4-2) Hot water shrinkage

A 500 mm-length of the obtained fiber was cut as a sample to evaluate the hot water shrink rate of the fiber. The fiber sample was immersed in boiling water for 30 min, and the sample lengths before and after the immersion were compared to measure the hot water shrinkage. The hot water shrinkage of the sample of the fiber obtained in Example 1 was 7.1%. As long as the value is 10% or less, the hot-water resistance of the fiber can be evaluated as sufficiently high.

### (4-3) Infrared-absorbent pigment dispersibility

The obtained multifilament fiber was unraveled into single fibers, one of which was embedded in a UV resin and then cut with a diamond knife to obtain a thin film. The obtained thin film was observed with a scanning transmission electron microscope (STEM). 20 particles selected randomly from the resulting STEM image were observed, and the particles having a particle size of 100 nm or more were counted and evaluated according to the following criteria.
The infrared-absorbent pigment dispersibility in the fiber obtained in Example 1 was "good".

If the number of particles having a particle size of 100 nm or more was 3 or less: "good" dispersibility

If the number of particles having a particle size of 100 nm or more was 4 or greater: "poor" dispersibility

### «Examples 2 to 7 and Comparative Examples 1 and 2»

Except that the composition of the MB and the amounts of the MB and homo-PET used were each changed as shown in Table 1 and the MB dilution ratio was as indicated in Table 1, a 50-denier, 24-filament fiber (multifilament) was manufactured in the same manner as in Example 1, and various evaluations were carried out.

In Comparative Example 1, the MB was spun without using a homo-PET. The fiber diameter varied and yarn breakage occurred. Consequently, stable spinning could not be carried out and spinning suitability was "poor". Therefore, the fiber and fabric evaluations of the obtained fiber was carried out by selecting relatively well-spun portions of the fiber.

Comparative Example 2 did not use MB pellets, and thus relates to a fiber consisting of a homo-PET and not comprising an infrared-absorbent pigment.

The evaluation results are shown in Table 1.

### <<Comparative Example 3>>

### (1) Manufacture of infrared-absorbent resin composition pellets

97.5 parts by mass of RE530A (product name, manufactured by Toyobo Co., Ltd.), which is a polyethylene terephthalate homopolymer (homo-PET), and 2.5 parts by mass (corresponding to 0.58 parts by mass of Cs_{0.33}WO₃ and 1.87 parts by mass of a dispersant) of a cesium tungsten oxide treated with a dispersant (CWO^{®}: YMDS-874, manufactured by Sumitomo Metal Mining Co., Ltd., comprising 23% by mass of Cs_{0.33}WO₃, 75% by mass of dispersant, and 2% by mass of others (such as residual solvent)) as a tungsten-based infrared-absorbent pigment were mixed using a batch-type miniature mixer (manufactured by Toyo Seiki Seisaku-sho, Ltd., model name "Labo Plastomill") to obtain an infrared-absorbent resin composition. The Cs_{0.33}WO₃ content in the composition was 0.575% by mass.

### (2) Evaluation of infrared-absorbent pigment dispersibility

The obtained resin composition was formed into a sheet with a heat press machine to obtain an infrared-absorbent sheet having a thickness of 50 µm. The obtained sheet was embedded in a UV resin and cut with a diamond knife to obtain a thin film. The obtained thin film was observed with a scanning transmission electron microscope (STEM), and the dispersion state of the infrared-absorbent pigment was evaluated according to the same criteria as in Example 1. The infrared-absorbent pigment dispersibility in the composition obtained in Comparative Example 3 was "poor". Consequently, spinning, as well as fiber and fabric evaluations, was not carried out for Comparative Example 3.

Examples 1 to 7 in Table 1 are listed in ascending order of the content ratios of copolymerized polyethylene terephthalate in the infrared-absorbent resin composition.

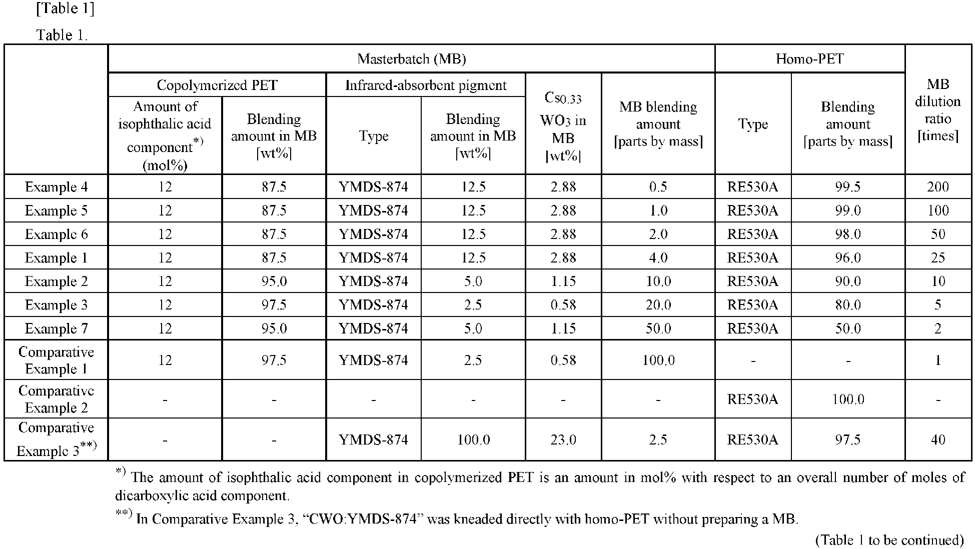

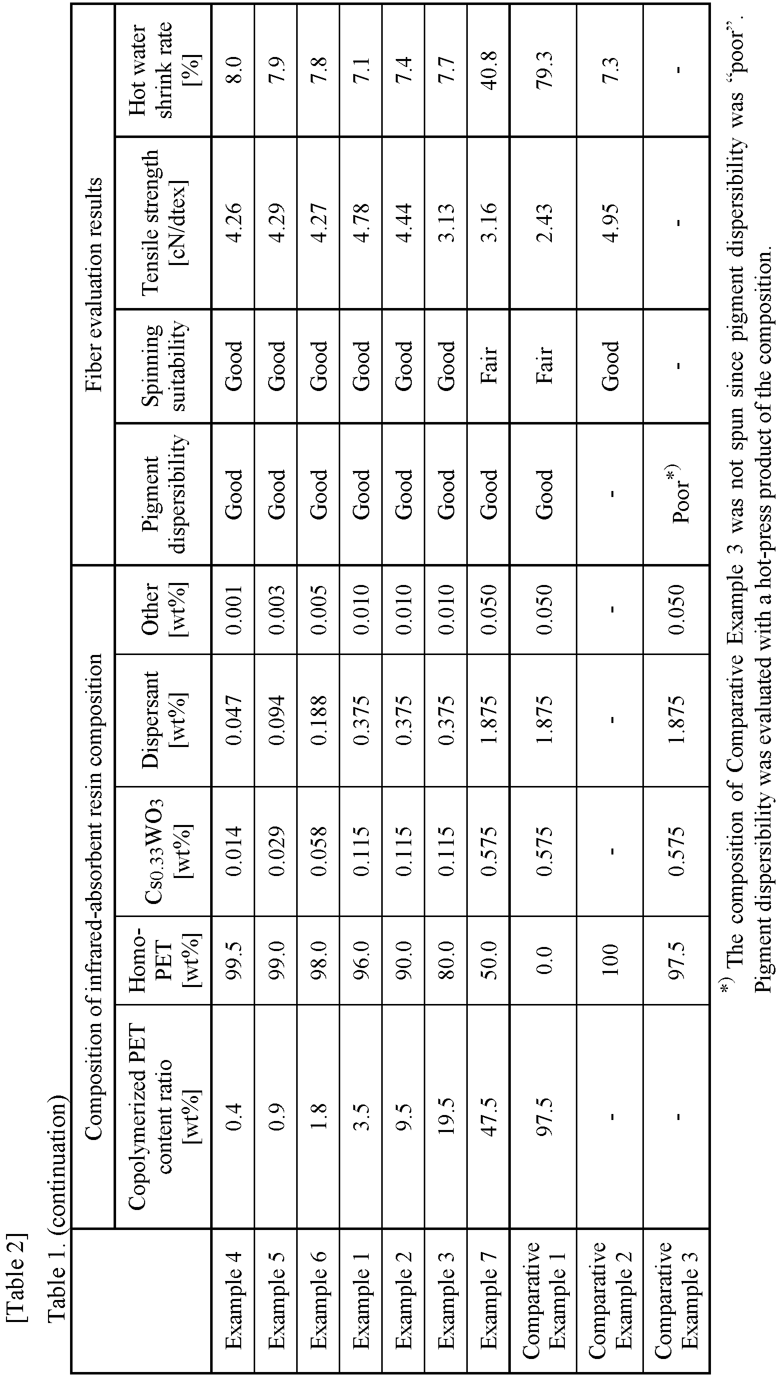

According to the above Table 1, the infrared-absorbent resin composition of Comparative Example 1, in which the resin comprises copolymerized PET only and does not comprise homo-PET, had satisfactory dispersibility of infrared-ab sorbent pigment in the resulting fiber but inferior spinning suitability. On the other hand, the infrared-absorbent resin composition of Comparative Example 3, in which the resin comprises homo-PET only and does not comprise copolymerized PET, had inferior dispersibility of infrared-absorbent pigment.

The infrared-absorbent resin composition of each of Examples 1 to 7, in which the resin comprises both copolymerized PET and homo-PET, had excellent spinning suitability and excellent dispersibility of infrared-absorbent pigment in the resulting fiber.

### «Heat storage test by infrared irradiation»

Fabrics were produced using fibers obtained from each of Examples 1 and 4 to 7 and Comparative Example 2, and the effect of heat storage from infrared irradiation was examined.

The fibers obtained in each of the Examples and Comparative Examples were circularly knitted (tubularly knitted) to produce a cylindrical fabric having a diameter of 70 mm (circumference of 220 mm) and a length of 100 mm. The cylindrical fabric was flattened into a rectangle to produce a sample having two layers of the fabric constituting the peripheral wall. The sample was mounted on a temperature sensor (thermocouple) that was mounted on a sample stage. At this time, the mounting position of the sample was adjusted so that the temperature detection portion of the temperature sensor was positioned in the center of the rectangular sample.

Under a reflector lamp having an output of 250 W was placed the sample stage, and the position thereof was adjusted so that the center of the rectangular sample came directly under the reflector lamp. The distance between the reflector lamp and a sample was 30 cm.

In this state, the reflector lamp was turned on, and fabric temperature was measured over time. The temperatures before irradiation (when the reflector lamp was lit) and 10 min thereafter were examined.

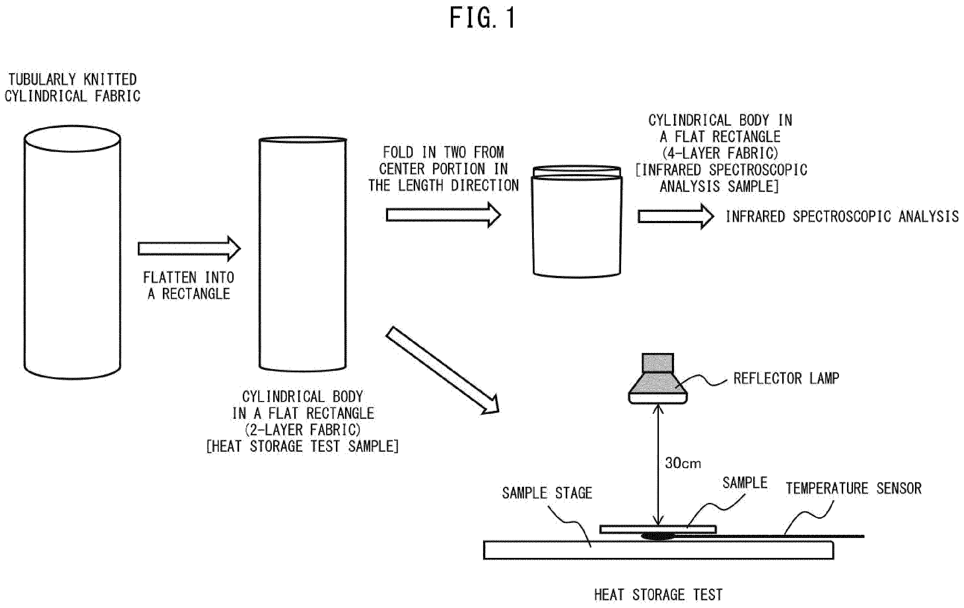

The procedure for the evaluation of heat storage effect is shown in FIG. 1. The evaluation results are shown in Table 2. Examples 1 and 4 to 7 in Table 2 are listed in ascending order of the content ratios of tungsten-based infrared-absorbent pigment in the infrared-absorbent resin composition.

### <<Infrared spectroscopic analysis>>

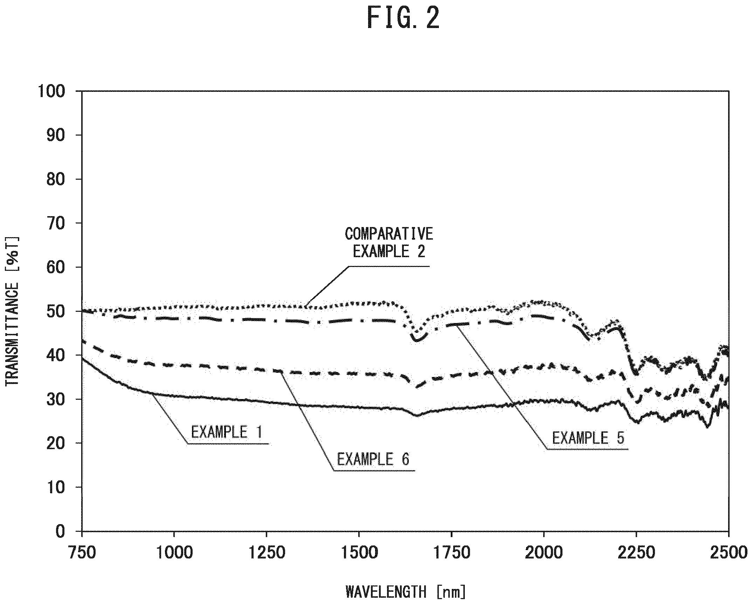

The cylindrical body in a flat rectangle produced in the above «Heat storage test by infrared irradiation» was folded in two from the center portion in the length direction of the cylindrical body, and a sample having four layers of the fabric constituting the peripheral wall was used to carry out a spectroscopic analysis in a wavelength region including near-infrared. The procedure for the evaluation of the infrared spectroscopic analysis is shown in FIG. 1. The resulting spectra in Examples 1, 4, and 6 and Comparative Example 2 are shown in FIG. 2.

### [Table 3]

**Table 2.**

| | Infrared-absorbent resin composition | | | Fiber evaluation results | | | |
|---|---|---|---|---|---|---|---|
| | | | | Fabric temperature | | | |
| | Copolymerized PET [wt%] | Homo-PET [wt%] | Cs_{0.33}WO₃ [wt%] | Temperature before irradiation [°C] | Temperature after 10 min [°C] | Rise in temperature in 10 min | |
| | | | | | | Rise in temperature [°C] | Difference from Comparative Example 2 [°C] |
| Example 4 | 0.4 | 99.5 | 0.014 | 24.5 | 43.2 | 18.7 | 0.8 |
| Example 5 | 0.9 | 99.0 | 0.029 | 24.5 | 44.0 | 19.5 | 1.6 |
| Example 6 | 1.8 | 98.0 | 0.058 | 24.5 | 50.2 | 25.7 | 7.8 |
| Example 1 | 3.5 | 96.0 | 0.115 | 24.5 | 52.8 | 28.3 | 10.4 |
| Example 7 | 47.5 | 50.0 | 0.575 | 24.5 | 59.7 | 35.2 | 17.3 |
| Comparative Example 2 | - | 100 | - | 24.5 | 42.4 | 17.9 | - |

According to the above Table 2, even in the fabric obtained from the infrared-absorbent resin composition of Example 4 in which the content ratio of tungsten-based infrared-absorbent pigment was 0.014% by mass, a difference in the effect of heat storage from infrared irradiation was observed in comparison with the fabric of Comparative Example 2 not comprising a tungsten-based infrared-absorbent pigment. Further, from the results of Examples 1 and 4 to 7, it was confirmed that the effect of heat storage from infrared irradiation increases as the content ratio of tungsten-based infrared-absorbent pigment increases.

### <<Dryability test>>

80 parts by weight of the fiber obtained in Example 3 and 20 parts by weight of a urethane fiber were used to produce a warp-knitted fabric, which was dyed in gray. The obtained fabric was then cut into 10 cm squares and used as test fabric samples for a dryability test. The basis weight of each test fabric sample was 240 g/m².

A test fabric sample was immersed in water and thoroughly wetted. The thoroughly wetted test fabric sample was pulled from the water, had excess moisture removed therefrom, and left standing in a sunny room, whereby the weight of the test fabric sample was tracked to determine the change over time in residual moisture content.

Herein, residual moisture content is a relative value (percentage) to when the amount of water contained in the test fabric sample immediately after being left standing is set to 100% by weight. The drying test was carried out in an environment having a temperature of 29.6 to 34.8 °C, a humidity of 15 to 22% RH, and an illuminance of 15,500 to 21,100 lux.

Except that a 50-denier, 24-filament fiber (multifilament) made of polyethylene terephthalate was used in place of the fiber obtained in Example 3, a reference fabric (at a basis weight of 240 g/m) was produced in the same manner as described above, and a sample thereof was used to determine the change over time in residual moisture content in the same manner as described above.

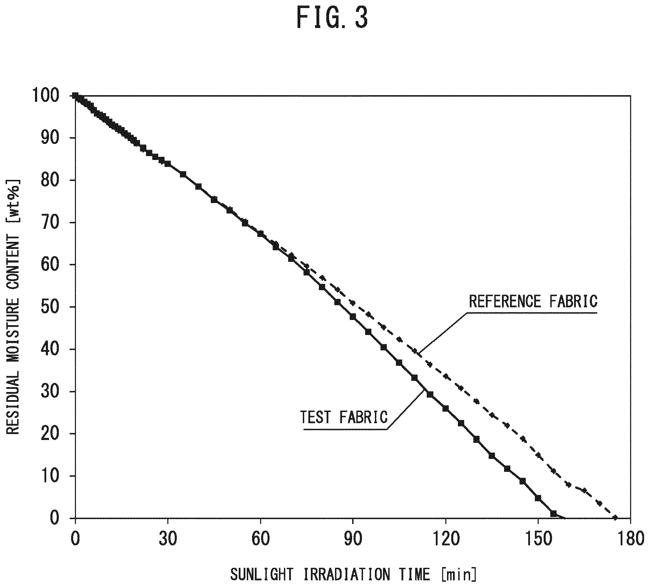

The changes over time in residual moisture content of the fabric samples are shown in FIG. 3. With reference to FIG. 3, it was found that the time required for the moisture content to reach 10% by weight was 160 min for the reference fabric sample, whereas the time required was 145 min for the test fabric sample using the fiber of Example 3. Accordingly, an infrared-absorbent fabric comprising the infrared-absorbent fiber of the present invention was confirmed to exhibit excellent quick-drying property.

## Claims

1. An infrared-absorbent resin composition, comprising a tungsten-based infrared-absorbent pigment, a copolymerized polyethylene terephthalate, and a polyethylene terephthalate homopolymer, wherein
the copolymerized polyethylene terephthalate has crystallinity.

2. The infrared-absorbent resin composition according to claim 1, wherein the copolymerized polyethylene terephthalate has a melting point of 210 °C or higher and 240 °C or lower.

3. The infrared-absorbent resin composition according to claim 1 or 2, wherein the copolymerized polyethylene terephthalate comprises a structure derived from isophthalic acid or an ester thereof as a third monomer.

4. The infrared-absorbent resin composition according to claim 3, wherein the copolymerized polyethylene terephthalate comprises the structure derived from isophthalic acid or an ester thereof in a range of 5.0 mol% or greater and 30 mol% or less, based on an overall number of moles of a dicarboxylic acid component.

5. The infrared-absorbent resin component according to any one of claims 1 to 4, wherein an amount of a copolymerization component derived from a third monomer of the polyethylene terephthalate homopolymer is less than 2.0 mol%, based on a total number of moles of a diol component and a dicarboxylic acid component in the polyethylene terephthalate homopolymer.

6. The infrared-absorbent resin component according to any one of claims 1 to 5, wherein a content ratio of the copolymerized polyethylene terephthalate is 0.1% by mass or greater and 50% by mass or less, based on an overall mass of the infrared-absorbent resin composition.

7. The infrared-absorbent resin component according to any one of claims 1 to 6, wherein a content ratio of the copolymerized polyethylene terephthalate is 0.5% by mass or greater and 45% by mass or less, based on an overall mass of the infrared-absorbent resin composition.

8. The infrared-absorbent resin component according to any one of claims 1 to 7, wherein a content ratio of the copolymerized polyethylene terephthalate is 0.5% by mass or greater and 20% by mass or less, based on a total mass of the copolymerized polyethylene terephthalate and the polyethylene terephthalate homopolymer.

9. The infrared-absorbent resin composition according to any one of claims 1 to 8, wherein a content ratio of the tungsten-based infrared-absorbent pigment is 0.01% by mass or greater, based on an overall mass of the infrared-absorbent resin composition.

10. The infrared-absorbent resin composition according to any one of claims 1 to 9, wherein the tungsten-based infrared-absorbent pigment is selected from the group consisting of
composite tungsten oxides, represented by general formula (1): MₓW_{y}O_{z}, wherein M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, and
tungsten oxides having a Magnéli phase, represented by general formula (2): W_{y}O_{z}, wherein W is tungsten; O is oxygen; y and z are each a positive number; and 2.45 ≤ z/y ≤ 2.999.

11. The infrared-absorbent resin composition according to any one of claims 1 to 10, further comprising an acrylic polymer dispersant.

12. An infrared-absorbent fiber, comprising the infrared-absorbent resin composition according to any one of claims 1 to 11.

13. A method for manufacturing an infrared-absorbent fiber, comprising:
preparing the infrared-absorbent resin composition according to any one of claims 1 to 11; and
melt-spinning the infrared-absorbent resin composition.

14. The method for manufacturing an infrared-absorbent fiber according to claim 13, wherein the infrared-absorbent resin composition is prepared by a method comprising the following steps:
kneading the tungsten-based infrared-absorbent pigment and the copolymerized polyethylene terephthalate to manufacture an infrared-absorbent pigment-containing masterbatch; and
kneading the infrared-absorbent pigment-containing masterbatch and the polyethylene terephthalate homopolymer to manufacture the infrared-absorbent resin composition.

15. An infrared-absorbent fabric, comprising the infrared-absorbent fiber according to claim 12.

16. An infrared-absorbent garment, comprising the infrared-absorbent fabric according to claim 15.
